(19) Europäisches Patentamt
European Patent Office
Office européen des brevets

(11) **EP 4 178 107 A1**

(12) **EUROPEAN PATENT APPLICATION**

(43) Date of publication:
**10.05.2023 Bulletin 2023/19**

(21) Application number: **21306561.8**

(22) Date of filing: **05.11.2021**

(51) International Patent Classification (IPC):
***H02S 50/00*** (2014.01)

(52) Cooperative Patent Classification (CPC):
**H02S 50/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **TotalEnergies OneTech**
**92400 Courbevoie (FR)**

(72) Inventors:
• **FLORAKIS, Antonios**
  **3000 LEUVEN (BE)**

• **HARDER, Nils**
  **92400 COURBEVOIE (FR)**
• **BOURARACH, Fadi**
  **91120 PALAISEAU (FR)**
• **SASAL, Lena**
  **65380 AZEREIX (FR)**
• **HOUZAY, Erwann**
  **64110 GELOS (FR)**

(74) Representative: **Lavoix**
**2, place d'Estienne d'Orves**
**75441 Paris Cedex 09 (FR)**

(54) **A METHOD FOR EVALUATING THE OPERATION OF A PHOTOVOLTAIC INSTALLATION IN AN ENVIRONMENT**

(57)     A method for evaluating the operation of a photovoltaic installation in an environment, the photovoltaic installation comprising several photovoltaic modules, the method being implemented by a computer and comprising the following steps:

a. collecting input data relative to the environment and to the photovoltaic installation,

b. determining irradiance parameters to be used by an irradiance calculating model on the basis of the input data, at least one irradiance parameter being a spatial variation of the albedo, called spatially resolved albedo, of a surface reflecting the sunlight on the photovoltaic modules,

c. determining the effective irradiance received by the photovoltaic installation on the basis of the irradiance calculating model, of the input data and of the determined irradiance parameter(s), and

d. determining the effective energy produced by the photovoltaic installation as a function of the determined effective irradiance and of the input data.

FIG.2

**Description**

TECHNICAL FIELD OF THE INVENTION

The present invention concerns a method for evaluating the operation (also the performances) of a photovoltaic installation in an environment. The invention also concerns an associated computer program product and a readable information carrier.

BACKGROUND OF THE INVENTION

The production of electricity from renewable energy sources is a challenge for our societies. To this end, dedicated installations have been developed, in particular photovoltaic installations, which allow electricity to be produced from solar energy. Photovoltaic installations typically comprise several photovoltaic modules on a supporting structure and which are deployed over the surface of a given area.

To optimize the deployment of photovoltaic installations, tools have been developed to estimate the solar production of a future installation, and thus assess its profitability.

However, the existing tools are based on several approximations, which could give rise to prediction errors, and consequently endanger the profitability of a project. These errors become more prominent in the case of bifacial installations, which are installations comprising photovoltaic modules able to capture light from both sides of the module; thus, increasing the power generation.

SUMMARY OF THE INVENTION

There exists a need for a tool enabling a better evaluation of the operation of a photovoltaic installation.

To this end, the invention relates to a method for evaluating the operation of a photovoltaic installation in an environment, the photovoltaic installation comprising several photovoltaic modules, the method being implemented by a computer and comprising the following steps:

a. collecting input data relative to the environment and to the photovoltaic installation,
b. determining irradiance parameters to be used by an irradiance calculating model on the basis of the input data, at least one irradiance parameter being a spatial variation of the albedo, called spatially resolved albedo, of a surface reflecting the sunlight on the photovoltaic modules,
c. determining the effective irradiance received by the photovoltaic installation on the basis of the irradiance calculating model, of the input data and of the determined irradiance parameter(s), and
d. determining the effective energy produced by the photovoltaic installation as a function of the determined effective irradiance and of the input data.

The method according to the invention may comprise one or more of the following features considered alone or in any combination that is technically possible:

- the method comprises a step of optimizing the photovoltaic installation, the optimization step comprises modifying at least one feature of the photovoltaic installation in order to increase the effective energy produced by the photovoltaic installation;
- the optimization step comprises modifying the material and/or the position of an element of the photovoltaic installation reflecting the sunlight on the photovoltaic modules to maximize the effective irradiance received by the photovoltaic installation;
- the optimization step comprises modifying the structure of a frame supporting the photovoltaic modules to increase the effective irradiance received by the photovoltaic installation, by reducing parasitic shading;
- when the photovoltaic installation is in a field of crops, at least one irradiance parameter is the variation of at least a feature of the crops over time such as the height and/or the reflectivity of the crops;
- at least one irradiance parameter is the evolution with time of the albedo of at least a surface reflecting the sunlight on the photovoltaic modules;
- at least one irradiance parameter is the variation with time of a soiling level of at least one photovoltaic module of the photovoltaic installation;
- at least one photovoltaic module of the photovoltaic installation is a bifacial photovoltaic module, the effective irradiance calculated by the irradiance calculating model being the irradiance received on both faces of each bifacial photovoltaic module;
- the determination of the spatially resolved albedo is carried out based on at least a satellite image, and/or onsite measurements and/or a simulation tool;

- the step of determining the effective energy produced by the photovoltaic installation comprises the determination, by a thermal model, of the evolution of the temperature of the photovoltaic modules as a function of the determined effective irradiance, of a given ambient temperature of the environment and of the input data;

- the thermal model is able to determine the effective temperature of each photovoltaic module for each timestep of a given temporal period so as to take into account the transient thermal inertia phenomena affecting the temperature of the cells of the photovoltaic module;

- the thermal model is able to determine the effective temperature of each photovoltaic module for a given timestep on the basis of the following formula:

$$T_{effective}$$
$$= \left(-\frac{C}{t_{step} \cdot (U + \phi \cdot \eta_{T_X} \cdot v)} \cdot \left(T_{e.p} - \frac{U \cdot T_a - \phi \cdot (1 - v \cdot T_X) \cdot \eta_{T_X} - \alpha}{U + \phi \cdot \eta_{T_X} \cdot v}\right) \cdot \left(\exp\left(\frac{-U - \phi \cdot \eta_{T_X} \cdot v}{C} \cdot t_{step}\right)\right.\right.$$
$$\left.\left. - 1\right)\right) + \frac{U \cdot T_a - \phi \cdot (1 - v \cdot T_X) \cdot \eta_{T_X} - \alpha}{U + \phi \cdot \eta_{T_X} \cdot v}$$

Where:

- $C$ is the termal capacity of the photovoltaic module,
- $t_{step}$ is the duration of the studied timestep,
- $U$ is the heat exchange coefficient of the photovoltaic module,
- $\Phi$ is incoming power flux from the sun,
- $T_X$ is a reference temperature, for example equal to 25°C, preferably the reference temperature is the temperature at the end of the previous timestep,
- $\eta_{T_X}$ is the efficiency of the photovoltaic module at the temperature $T_X$ for converting the incoming power flux $\Phi$ from the sun,
- $v$ is the temperature coefficient of the efficiency of the photovoltaic module,
- $T_{e.p}$ is the temperature at the end of the previous timestep,
- $T_a$ is the ambient temperature of the air, and
- $\alpha$ is the absorption coefficient of the cells of the photovoltaic module;

- the determination of the effective energy produced by the photovoltaic installation comprises :

  a. the determination of the DC current produced by the photovoltaic installation, by an electrical model, as a function of the input data, of the determined effective irradiance and of the determined evolution of the temperature of the photovoltaic modules, and
  b. the conversion of the DC current into an AC current on the basis of a conversion model;

- the input data comprises at least a piece of data chosen in the group comprising:

  data relative to components of the photovoltaic installation, data relative to the ground of the environment, meteorological data, positioning data and data relative to grid-imposed limitations.

The invention also relates to a computer program product comprising a computer readable medium, having thereon a computer program comprising program instructions, the computer program being loadable into a data-processing unit and causing execution of a method as previously described when the computer program is run by the data-processing unit.

The invention also relates to a readable information carrier on which is stored a computer program product as previously described.

BRIEF DESCRIPTION OF THE DRAWINGS

The invention will be easier to understand in view of the following description, provided solely as an example and with reference to the appended drawings in which:

- Figure 1 is a schematic view of an example of a calculator allowing the implementation of a method for evaluating the operation of a photovoltaic installation in an environment,
- Figure 2 is a flowchart of an example of implementation of a method for evaluating the operation of a photovoltaic installation in an environment,
- Figure 3 is a schematic representation of a bifacial photovoltaic module receiving solar light, and
- Figure 4 is a schematic representation of a photovoltaic installation comprising zones of different albedo values so as to optimize the light captured by the rear side of the photovoltaic module of the installation by covering the percentage of the ground that will be more economically viable.

## DETAILED DESCRIPTION OF SOME EMBODIMENTS

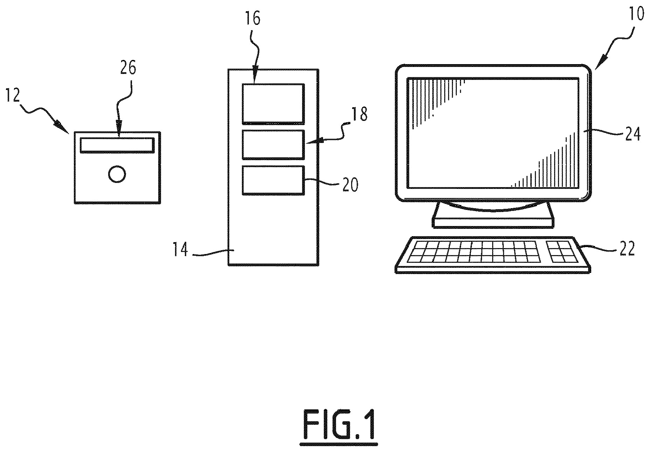

A calculator 10 and a computer program product 12 are illustrated on figure 1.

The calculator 10 is preferably a computer.

More generally, the controller 10 is a computer or computing system, or similar electronic computing device adapted to manipulate and/or transform data represented as physical, such as electronic, quantities within the computing system's registers and/or memories into other data similarly represented as physical quantities within the computing system's memories, registers or other such information storage, transmission or display devices.

The calculator 10 interacts with the computer program product 12.

As illustrated on figure 1, the calculator 10 comprises a processor 14 comprising a data processing unit 16, memories 18 and a reader 20 for information media. In the example illustrated on figure 1, the calculator 10 comprises a human machine interface 22, such as a keyboard, and a display 24.

The computer program product 12 comprises an information medium 26.

The information medium 26 is a medium readable by the calculator 10, usually by the data processing unit 16. The readable information medium 26 is a medium suitable for storing electronic instructions and capable of being coupled to a computer system bus.

By way of example, the information medium 26 is a USB key, a floppy disk or flexible disk (of the English name "Floppy disc"), an optical disk, a CD-ROM, a magneto-optical disk, a ROM memory, a memory RAM, EPROM memory, EEPROM memory, magnetic card or optical card.

On the information medium 26 is stored the computer program 12 comprising program instructions.

The computer program 12 is loadable on the data processing unit 16 and is adapted to entail the implementation of a method for evaluating the operation of a photovoltaic installation in an environment, when the computer program 12 is loaded on the processing unit 16 of the calculator 10.

In a variant, the computer program is stored on a cloud accessible through a server.

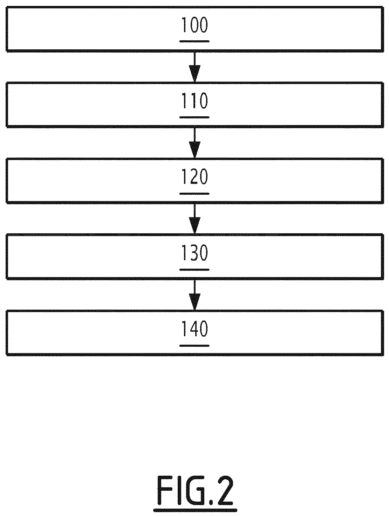

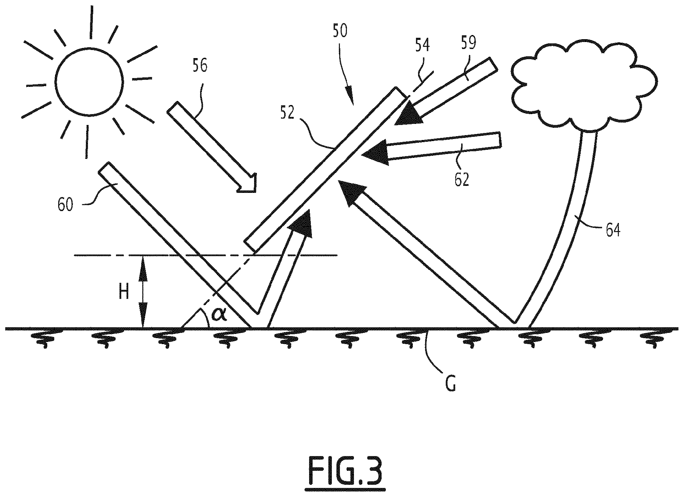

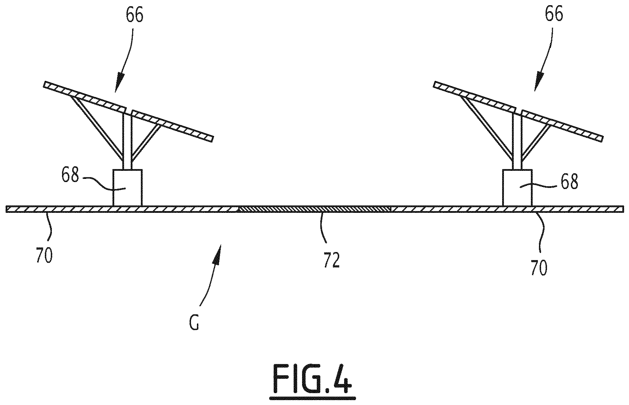

Operation of the calculator 10 will now be described with reference to figure 2, which diagrammatically illustrates an example of implementation of a method for evaluating the operation of a photovoltaic installation in an environment, and to figures 3 and 4 which illustrate in more detail some steps of this method.

The method enables to evaluate the operation of a photovoltaic installation in a given environment. The operation is relative to the ability of the photovoltaic installation to produce solar energy.

The considered photovoltaic installation is for example a simulated photovoltaic installation. The photovoltaic installation comprises for example an optical and thermal-electrical part and a converting part.

The optical and thermal-electrical part preferably comprises several photovoltaic panels, each made of several photovoltaic modules. Each photovoltaic module is made of several photovoltaic cells. The photovoltaic modules of a same photovoltaic panel are mounted on a supporting structure. For example, the supporting structure either is placed directly on the ground (or a planar surface on the ground), or comprises pillars elevating the photovoltaic modules from the ground (in particular when the modules are bifacial modules). The ground is for example a roof, a field or any other surfaces suitable for the installation of a photovoltaic installation.

Figure 3 illustrates an example of a bifacial photovoltaic module 50 at a height H from the ground and having an inclination angle $\alpha$ relative to the ground G. The bifacial photovoltaic module 50 receives light on his front side 52 and his rear side 54. As can be seen on figure 3, the front side 52 of the bifacial module 50 receives direct sunlight 56. The rear side 54 of the bifacial module 50 receives direct sunlight 59, reflected direct sunlight 60 (notably direct sunlight after reflection on the ground G), diffuse sunlight 62 (light scattered by the environment, especially by clouds) and reflected diffuse sunlight 64 (light reflected by the environment, especially by the ground, vegetation or other nearby humain or natural structures).

Figure 4 illustrates an example of an installation comprising two photovoltaic panels 66 elevated from the ground G by structures 68 supporting the photovoltaic panels 66.

The converting part comprises DC-AC converters enabling to convert DC current into an AC current.

The determination method comprises a step 100 for collecting input data relative to the environment and to the photovoltaic installation. The collecting step 100 is implemented by the calculator 10 in interaction with the computer program product 12, that is to say is implemented by a computer.

The input data comprises, for example, at least a piece of data chosen in the group comprising: data relative to components of the photovoltaic installation, data relative to the ground of the environment, meteorological data, positioning data (location of the photovoltaic installation) and data relative to grid-imposed limitations.

The data relative to the components relate, for example, to at least one of: the photovoltaic modules of the photovoltaic installation, to the supporting structure(s) of the photovoltaic modules and to the DC-AC converters of the photovoltaic installation.

The data relative to the photovoltaic modules and the supporting structure are for example data relative to the material and/or the geometry and/or the thermal and electrical properties of such components. For example, the input data also comprise other intrinsic data relative to the photovoltaic modules such as the thermal capacity of the photovoltaic modules, the heat exchange coefficient of the photovoltaic modules, the efficiency of the photovoltaic modules at a given temperature for converting the incoming power flux from the sun, the temperature coefficients controlling the thermal dissipation of the module on a given mounting configuration, and the absorption coefficient of the photovoltaic modules.

The data relative to DC-AC converters comprises for example data relative to DC and AC cabling.

The data relative to grid-imposed limitations are constraints relative to the operation of the photovoltaic installation. The grid-limitation (in Watts) is the maximum amount of power that can be injected into the electricity transmission grid. For example, to ensure the stability of the grid linked to the installation, the grid operator will impose a limit on the maximal power to be injected into the grid.

The determination method comprises a step 110 for determining irradiance parameters to be used by an irradiance calculating model on the basis of the input data. The determination step 110 is implemented by the calculator 10 in interaction with the computer program product 12, that is to say is implemented by a computer.

The irradiance parameters are parameters used for the calculation of the effective irradiance received by the photovoltaic installation. The irradiance, expressed in Watt per square meter ($W/m^2$), is the incident radiant flux (plane of array power) received by a surface per unit area.

One of the irradiance parameters is a spatial variation of the albedo, called spatially resolved albedo, of a surface (such as the ground) reflecting the sunlight on the photovoltaic modules. The albedo is the reflectivity of a surface, that is to say the ratio between the amount of reflected light and the amount of incident light. The spatially resolved albedo is the spatial variation of the albedo over a surface. In the example of the photovoltaic installation, spatially resolved albedo implies that the ground (or the surface on the ground supporting the photovoltaic installation) between the modules comprises zones of different albedo. The spatial variation of the albedo of a component made of a uniform material is for example due to non-uniformity of the component, or to the non-homogeneity of the placement, or to vegetation placed non evenly between the module rows.

For example, on figure 4, the ground surface G of the installation comprises portions 70 (with hatching) having a higher albedo than portions 72, which increases the amount of the ground reflected irradiance received by the rear side of the photovoltaic modules.

For example, the spatially resolved albedo of a surface is obtained on the basis of natural albedo values of the surface, and/or enhanced albedo values (values taking into account the interactions with the environment). For example, a model uses the discretization of the ground on different segments, where in each of them a different albedo value is assigned (natural or enhanced).

The natural albedo is for example determined on the basis of at least an image seen from the sky of the environment, for example a satellite image, preferably several satellite images imaging the ground at different view angles.

In another example, the natural albedo is determined on the basis of onsite measurements. The measurements are for example acquired by an albedometer.

In another example, the natural albedo is determined on the basis of a model such as simulation tools, for example models of the materials constituting the ground.

The spatially resolved albedo is for example obtained on the basis of a model receiving instructions of how the ground surface is placed with respect to the photovoltaic installation. Therefore, parameters relative to the installation and to the environment, such as positioning, width, albedo and natural ground albedo, are for example used in the determination of spatially resolved albedo.

Preferably, when the photovoltaic installation is in a field of crops, at least one irradiance parameter is the variation of a feature of the crops over time, such as the height and / or reflectivity of the crops over time. A crop is a plant that is cultivated on an extended surface. The plants forming a crop are, for example, rice, wheat, oat, millet, fruits and vegetable. Such parameters are for example taken into account when calculating the spatially resolved albedo. Such parameters are for example obtained through images of the crops taken at different time of the year, or from onsite measurements, or from simulation tools.

Preferably, at least one irradiance parameter is the evolution with time of the albedo of at least a surface reflecting the sunlight on the photovoltaic modules. Indeed, even for the same material, and the same location, the albedo is not constant and may vary due to multiple factors such as the seasonality, the location, the ground material, changes on the morphology of the ground, clouds and the sun position. Taking into account the albedo as time series, enables to obtain results that are more precise.

The time evolution of the albedo is for example determined on the basis of images seen from the sky (satellite image) of the environment for different time series, or from onsite measurements, or from simulation tools.

Preferably, at least one irradiance parameter is the variation with time of the soiling level of at least one photovoltaic module of the photovoltaic installation. The soiling of a photovoltaic module is the accumulation of dirt over the surface of the glass that protects the photovoltaic cells of the module. In urban area, the dirt is for example, caused by the pollution which forms a deposit on the surface of the module that hinders the passage of sunlight. In the countryside, even though there is less pollution, pollen, dust or sea salt can also deposit on the surface of the module. Such parameter is particularly relevant for environment like desert, where the soiling rates are high.

The soiling levels (or soiling rates) vary due to the accumulation of dirt but also due to rain or cleaning schedule. Taking into account the variation with time of the soiling levels enable a more precise evaluation of the irradiance of the photovoltaic modules.

The soiling levels are for example obtained through experimental data relative to the evolution with time of the soiling levels or the daily soiling rate, and data relative to a cleaning schedule. Optionally, the soiling rate values can be obtained by literature (historical data).

The determination method comprises a step 120 for determining the effective irradiance received by the photovoltaic installation on the basis of an irradiance calculating model, of the input data and of the determined irradiance parameter(s). The determination step 120 is implemented by the calculator 10 in interaction with the computer program product 12, that is to say is implemented by a computer.

The irradiance calculating model is a model enabling to take into account the spatially resolved albedo of a surface (such as the ground) reflecting the sunlight on the photovoltaic modules of the installation. Hence, the irradiance calculating model is able to determine the irradiance received by a photovoltaic installation on the basis of the input data (geometry, materials of the installation, features of the environment) and of at least the spatially resolved albedo. In an example, the irradiance calculating model calculate the effective irradiance on the Plane of Array (POA) on the basis of the following equation:

$$Irrad_{eff} = \left(Irrad_{front} * IAM_{front} + Irrad_{rear} * IAM_{rear} * Bifi_{factor}\right) * soiling$$

Where:

- $Irrad_{eff}$ is the effective irradiance,
- $Irrad_{front}$ is the front irradiance,
- $IAM_{front}$ is the front incidence angle modifier to include the glass effect (attenuation and angular correction),
- $Irrad_{rear}$ is the rear irradiance,
- $IAM_{rear}$ is the rear incidence angle modifier to include the glass effect (attenuation and angular correction),
- $Bifi_{factor}$ is the bifaciality factor of the module, and
- *soiling* is the ratio of the plane of array (POA) irradiance that is not absorbed by the dirt divided by the overall POA irradiance.

The effective irradiance calculated by the irradiance calculating model is the irradiance received on both faces of each bifacial photovoltaic module when the installation comprises bifacial photovoltaic modules, eventually reduced by soiling, glass, angle of incidence and for the rear side only by bifaciality.

For example, the irradiance calculating model is based on an initial irradiance model that has been modified to incorporate functions taking into account the determined irradiance parameters (especially spatially resolved albedo). In an example, the initial model is applied stepwise to a segmented ground, each segment being assigned to a different albedo value. For example, the functions of the initial model that have been modified are relative to the amount of light that reaches the rear side of the modules (bifacial module). These functions are modified to collect the back-reflected light from different areas, arrayed between the module rows. In this example, for the proper determination of the problem, the row to row distance is for example defined by a user, as well as the different albedo values into the different areas, the starting point of the high albedo zone, and the width of the high albedo zone.

The initial model is for example based on a ray tracing simulation software.

The initial model is for example a model described in at least one of the following articles:

- Ayala Pelaez, Silvana, Deline, Chris (2020). bifacial_radiance: a python package for modeling bifacial solar photovoltaic systems. Journal of Open Source Software, 5(50), 1865.
- Holmgren, W., C. Hansen and M. Mikofski (2018). "pvlib Python: A python package for modeling solar energy systems." Journal of Open Source Software 3(29): 884.

Preferably, the irradiance calculating model also takes into account the variation of features relative to the crops, such as the height and / or reflectivity of the crops over time, in the determination of the spatially resolved albedo.

Preferably, the irradiance calculating model also takes into account the time evolution of the albedo of a surface (such as the ground) reflecting the sunlight on the photovoltaic modules of the installation. To do that, the effective irradiance is for example calculated for different timesteps and with different albedo values to reflect the daily and seasonal temporality.

Preferably, the irradiance calculating model also takes into account the soiling levels of at least one photovoltaic module of the photovoltaic installation, and preferably of all the photovoltaic modules of the photovoltaic installation. To do that, the effective irradiance at a given point for a given timestamp is for example the product of a determined irradiance at the given point for the given timestamp multiplied by the soiling level at the same point and time.

In an embodiment, the irradiance calculating model has been selected among a plurality of irradiance calculating models as a function of the environment and of the photovoltaic installation so as to comply with a precision criterion. Each irradiance calculating model uses at least one irradiance parameter, for the calculation of the effective irradiance, which is different from the other irradiance calculating models. The precision criterion stipulates a level of approximation acceptable by the irradiance calculating model.

For example, one irradiance calculating model only takes into account the mean value of the soiling levels over a predetermined period of time, whereas another one takes into account the daily rate with a scheduled cleaning, whereas the last one (more precise) takes into account the time evolution of the soiling levels over the same predetermined period of time. For example, in environment like deserts, the last irradiance calculating model would be preferable.

In another example, one irradiance calculating model only takes into account a value of the albedo which is constant over time for a given location, whereas another irradiance calculating model (more precise) takes into account the variation of albedo at the given location as timeseries.

Hence, the selection of one model over another depends on the specificities of the installation and of the environment. The selection is for example done by a user or automatically on the basis of features of the installation and the environment. For example, the input data comprises features enabling to carry out the selection of a specific model (for example choosing between a thermal model which include transient phenomena or not, or to choose between irradiance models depending of what the user has or can get access to).

The determination method comprises a step 130 for determining the effective energy produced by the photovoltaic installation as a function of the determined effective irradiance and of the input data. The determination step 130 is implemented by the calculator 10 in interaction with the computer program product 12, that is to say is implemented by a computer.

The effective energy produced by the photovoltaic installation is for example the AC current obtained from the photovoltaic installation. Other solar data can also be determined, such as the yield or specific production of the photovoltaic installation. The yield is the ratio between the energy produced (kWh) and the theotical power (KWp) of the installation.

Preferably, the effective energy produced by the photovoltaic installation is determined by a thermal model, an electrical model and a conversion model. The thermal model enables to determine the evolution with time of the temperature of the photovoltaic modules. The electrical model enables to determine the DC current produced by the photovoltaic installation as a function of the input data, of the determined effective irradiance and of the determined evolution of the temperature of the photovoltaic modules. The conversion model enables to convert the DC current into an AC current.

For example, these models are based on the tools described in the article: Holmgren, W., C. Hansen and M. Mikofski (2018). "pvlib Python: A python package for modeling solar energy systems." Journal of Open Source Software 3(29): 884.

For examples, these models are based on the thermal model of the tool PVsyst. Such thermal model corresponds to the following equation:

$$U.(T_{module} - T_{amb}) = \alpha.G_{inc}.(1 - Effic)$$

ie

$$T_{module} = T_{amb} + \frac{1}{U}.\left(\alpha.G_{inc}.(1 - Effic)\right)$$

where:

- $T_{amb}$ is the ambient temperature, according to the meteorological data,
- $G_{inc}$ is the effective irradiance received on the module or photovoltaic array,
- $\alpha$ is the module absorption coefficient of solar irradiation, i.e. (1 - reflection). The usual value of the Absorption coefficient Alpha is 0.9.
- *Effic* is the PV efficiency (related to the module area), i.e. the amount of energy that is converted to electricity and thus not as thermal energy. When possible, the PV efficiency is calculated according to the operating conditions of the module. Otherwise it is taken as 10%.
- $U$ is the heat exchange coefficient, governing the thermal behavior of the module, $U$ is characterised by a thermal loss factor designed here by U-value (formerly called K-value). This can be split into a constant component Uc and a factor proportional to the wind velocity Uv :

$$U = U_c + U_v . v$$

(Uc in [W/m$^2$·k], Uv in [W/m$^2$·k/m/s], v = wind velocity in [m/s]).

In a specific embodiment, the thermal model has been optimized to take into account the transient thermal inertia phenomena affecting the cell temperature evolution for high temporal resolution cases. Preferably, the thermal model determines the evolution with time of the temperature of the photovoltaic modules as a function of the determined effective irradiance, in a given ambient temperature of the environment and of the input data.

Taking into account such transient thermal inertia phenomena enables to obtain more precise simulation especially for simulations with high temporal resolution (one minute and beyond). In particular, the thermal inertia effects play a role in meteorological conditions with strongly fluctuating illumination intensity where the strong fluctuations of illumination require short timesteps for accurate modelling.

In an example, the thermal model's enables to obtain an effective temperature for each timestep (for example 1 minute) of a period of time. The effective temperature takes into account the temperature of the previous step to calculate a more realistic value. The efficiency of the module is also used in the calculation of this temperature and is corrected from the nominal value to the timestep specific irradiance and newly calculated cell temperature.

For example, the effective temperature of a photovoltaic module is given by the following formula:

$$
\begin{aligned}
T_{effective} &= \left(-\frac{C}{t_{step} \cdot (U + \phi . \eta_{T_X} . v)} \cdot \left(T_{e.p} - \frac{U . T_a - \phi . (1 - v . T_X) . \eta_{T_X} - \alpha}{U + \phi . \eta_{T_X} . v}\right) \cdot \left(\exp\left(\frac{-U - \phi . \eta_{T_X} . v}{C} . t_{step}\right) - 1\right)\right) + \frac{U . T_a - \phi . (1 - v . T_X) . \eta_{T_X} - \alpha}{U + \phi . \eta_{T_X} . v}
\end{aligned}
$$

Where:

- C is the thermal capacity of the photovoltaic module,
- $t_{step}$ is the duration of the studied timestep,
- $U$ is the heat exchange coefficient of the photovoltaic module,
- $\Phi$ is incoming power flux from the sun (obtained through the determined effective irradiance),
- $T_X$ is a reference temperature, for example equal to 25°C, preferably the reference temperature is the temperature at the end of the previous timestep,
- $\eta_{T_X}$ is the efficiency of the photovoltaic module at the temperature $T_x$ for converting the incoming power flux $\Phi$ from the sun,
- $v$ is the temperature coefficient for each relevant illumination intensity,
- $T_{e.p}$ is the temperature at the end of the previous timestep (for example equal to the ambient temperature for the first timestep),
- $T_a$ is the ambient temperature of the air, and
- $\alpha$ is the absorption coefficient of the cells of the photovoltaic module (for example 90%).

The values of C, $U$, $\eta_{T_X}$, $v$, $T_a$ and $\alpha$ are for example part of the input data.

In this example, the output of the thermal model is an energy E produced by the photovoltaic module at the present timestep, which is for example given by the following formula:

$$E = \phi . \eta \left[ \phi, T_{effective} \right] . t_{step}$$

Optionally, the determination method comprises a step 140 for optimizing the photovoltaic installation. The optimization step 140 is implemented by the calculator 10 in interaction with the computer program product 12, that is to say is implemented by a computer.

The optimization step 140 comprises for example the modification of at least one feature of the photovoltaic installation in order to increase the effective energy produced by the photovoltaic installation.

In an example, the optimization step 140 comprises modifying the material and/or the position of an element of the photovoltaic installation reflecting the sunlight on the photovoltaic modules to maximize the effective irradiance received by the photovoltaic installation. For example, regarding figure 4, a specific material with higher albedo is placed on the ground at positions enabling to reflect more light on the rear sides of the photovoltaic modules.

In addition or in a variant, the optimization step 140 comprises modifying the structure of a frame supporting the photovoltaic modules to increase the effective irradiance received by the photovoltaic installation, by reducing parasitic shading.

In the case of vertically mounted modules, the presence of frame could introduce extra shading losses on the rear side of the modules. The detailed inclusion of the frame on the modeling workflow, can lead to direct calculation of thermal losses by combining the mapping of irradiance distribution and an electrical mismatch model due to irradiance non-uniformity.

Hence, the described determination method enables better evaluating the operation and the performances of a photovoltaic installation by taking into account specific irradiation parameters, such as the spatially resolved albedo. Such a method is of particular interest to model bifacial installations.

Such a method can be used either:

- to conduct simulations using specific description of the installation (components, geometry, ground characteristics and meteorological information / location) to get a detailed understanding of the performance evolution and loss mechanisms
- as an optimization tool: for a specific location, given meteorological conditions and project related constraints, it may be used to conduct a large number of simulations by varying multiple parameters / features like components (module and inverter and tracker types). In this way, it is possible to optimize the design, based on a targeted optimization strategy. An example of optimization could be to place high albedo sites at strategical places in order to maximize the reflectivity of the corresponding material and the light arriving at the rear side of the module in the case of a bifacial module.

Therefore, such a method and tool can be used for design optimization and for financial decision-making during bids for call for tenders, based on the predicted amount of energy or yield.

The person skilled in the art will understand that the embodiments and variants described above can be combined to form new embodiments provided that they are technically compatible.

**Claims**

1. A method for evaluating the operation of a photovoltaic installation in an environment, the photovoltaic installation comprising several photovoltaic modules, the method being implemented by a computer and comprising the following steps:

   a. collecting input data relative to the environment and to the photovoltaic installation,
   b. determining irradiance parameters to be used by an irradiance calculating model on the basis of the input data, at least one irradiance parameter being a spatial variation of the albedo, called spatially resolved albedo, of a surface reflecting the sunlight on the photovoltaic modules,
   c. determining the effective irradiance received by the photovoltaic installation on the basis of the irradiance calculating model, of the input data and of the determined irradiance parameter(s), and
   d. determining the effective energy produced by the photovoltaic installation as a function of the determined effective irradiance and of the input data.

2. A method according to claim 1, wherein the method comprises a step of optimizing the photovoltaic installation, the optimization step comprises modifying at least one feature of the photovoltaic installation in order to increase the effective energy produced by the photovoltaic installation.

3. A method according to claim 2, wherein the optimization step comprises modifying the material and/or the position of an element of the photovoltaic installation reflecting the sunlight on the photovoltaic modules to maximize the effective irradiance received by the photovoltaic installation.

4. A method according to claim 2 or 3, wherein the optimization step comprises modifying the structure of a frame supporting the photovoltaic modules to increase the effective irradiance received by the photovoltaic installation, by reducing parasitic shading.

5. A method according to any one of claims 1 to 4, wherein when the photovoltaic installation is in a field of crops, at least one irradiance parameter is the variation of at least a feature of the crops over time such as the height and / or the reflectivity of the crops.

6. A method according to any one of claims 1 to 5, wherein at least one irradiance parameter is the evolution with time of the albedo of at least a surface reflecting the sunlight on the photovoltaic modules.

7. A method according to any one of claims 1 to 6, wherein at least one irradiance parameter is the variation with time of a soiling level of at least one photovoltaic module of the photovoltaic installation.

8. A method according to any one of claims 1 to 7, wherein at least one photovoltaic module of the photovoltaic installation is a bifacial photovoltaic module, the effective irradiance calculated by the irradiance calculating model being the irradiance received on both faces of each bifacial photovoltaic module.

9. A method according to any one of claims 1 to 8, wherein the determination of the spatially resolved albedo is carried out based on at least a satellite image, and/or onsite measurements and/or a simulation tool.

10. A method according to any one of claims 1 to 9, wherein the step of determining the effective energy produced by the photovoltaic installation comprises the determination, by a thermal model, of the evolution of the temperature of the photovoltaic modules as a function of the determined effective irradiance, of a given ambient temperature of the environment and of the input data.

11. A method according to claim 10, wherein the thermal model is able to determine the effective temperature of each photovoltaic module for each timestep of a given temporal period so as to take into account the transient thermal inertia phenomena affecting the temperature of the cells of the photovoltaic module.

12. A method according to claim 10 or 11, wherein the thermal model is able to determine the effective temperature of each photovoltaic module for a given timestep on the basis of the following formula:

$$
\begin{aligned}
T_{effective} \\
= (-\frac{C}{t_{step}.\left(U + \phi.\eta_{T_X}.v\right)}.\left(T_{e.p} - \frac{U.T_a - \phi.(1 - v.T_X).\eta_{T_X} - \alpha}{U + \phi.\eta_{T_X}.v}\right).(\exp\left(\frac{-U - \phi.\eta_{T_X}.v}{C}.t_{step}\right) \\
- 1)) + \frac{U.T_a - \phi.(1 - v.T_X).\eta_{T_X} - \alpha}{U + \phi.\eta_{T_X}.v}
\end{aligned}
$$

Where:

• C is the termal capacity of the photovoltaic module,
• $t_{step}$ is the duration of the studied timestep,
• $U$ is the heat exchange coefficient of the photovoltaic module,
• $\Phi$ is incoming power flux from the sun,
• $T_x$ is a reference temperature, for example equal to 25°C, preferably the reference temperature is the temperature at the end of the previous timestep,

- $\eta_{T_X}$ is the efficiency of the photovoltaic module at the temperature $T_x$ for converting the incoming power flux $\Phi$ from the sun,
- $\upsilon$ is the temperature coefficient of the efficiency of the photovoltaic module,
- $T_{e.p}$ is the temperature at the end of the previous timestep,
- $T_a$ is the ambient temperature of the air, and
- $\alpha$ is the absorption coefficient of the cells of the photovoltaic module.

13. A method according to claim 11 or 12, wherein the determination of the effective energy produced by the photovoltaic installation comprises :

   a. the determination of the DC current produced by the photovoltaic installation, by an electrical model, as a function of the input data, of the determined effective irradiance and of the determined evolution of the temperature of the photovoltaic modules, and
   b. the conversion of the DC current into an AC current on the basis of a conversion model.

14. A method according to any one of claims 1 to 13, wherein the input data comprises at least a piece of data chosen in the group comprising: data relative to components of the photovoltaic installation, data relative to the ground of the environment, meteorological data, positioning data and data relative to grid-imposed limitations.

15. Computer program product comprising a computer readable medium, having thereon a computer program comprising program instructions, the computer program being loadable into a data-processing unit and causing execution of a method according to any one of claims 1 to 14 when the computer program is run by the data-processing unit.

**FIG.1**

FIG.2

FIG.3

66

66

68

68

70

72

70

G

## FIG.4

Europäisches Patentamt

European Patent Office

Office européen des brevets

## EUROPEAN SEARCH REPORT

| | Application Number |
|---|---|
| | **EP 21 30 6561** |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 11 063 556 B1 (PIATT CLAYTON GREGORY [US] ET AL) 13 July 2021 (2021-07-13)<br>* figures 1-15 *<br>----- | 1-10,<br>13-15<br>12 | INV.<br>H02S50/00 |

| | TECHNICAL FIELDS SEARCHED (IPC) |
|---|---|
| | H02S |

The present search report has been drawn up for all claims

| Place of search | Date of completion of the search | Examiner |
|---|---|---|
| The Hague | 12 April 2022 | Boero, Mauro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 30 6561

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2022

| Patent document cited in search report | Publication date | Patent family member(s) | Publication date |
|---|---|---|---|
| US 11063556 B1 | 13-07-2021 | NONE | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AYALA PELAEZ ; SILVANA ; DELINE ; CHRIS.** bifacial_radiance: a python package for modeling bifacial solar photovoltaic systems. *Journal of Open Source Software,* 2020, vol. 5 (50), 1865

- **HOLMGREN, W. ; C. HANSEN ; M. MIKOFSKI.** pvlib Python: A python package for modeling solar energy systems. *Journal of Open Source Software,* 2018, vol. 3 (29), 884